(19) Europäisches Patentamt / European Patent Office / Office européen des brevets

(11) **EP 3 594 895 B1**

(12) **FASCICULE DE BREVET EUROPEEN**

(45) Date de publication et mention de la délivrance du brevet:
**11.12.2024 Bulletin 2024/50**

(21) Numéro de dépôt: **19185438.9**

(22) Date de dépôt: **10.07.2019**

(51) Classification Internationale des Brevets (IPC):
**G06T 5/00** *(2024.01)*     **G06T 5/50** *(2006.01)*

(52) Classification Coopérative des Brevets (CPC):
**G06T 5/70; G06T 5/50;** G06T 2207/20182

(54) **DEBRUITEUR SPATIO-TEMPOREL DE CONTENUS VIDEO BASE SUR DES INDICES DE CONFIANCE**

RÄUMLICH-ZEITLICHER RAUSCHFILTER FÜR VIDEODATEN, DER AUF KONFIDENZINDEXEN BASIERT

SPACE-TIME VIDEO CONTENT NOISE REDUCER BASED ON CONFIDENCE INDICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2018 FR 1856349**

(43) Date de publication de la demande:
**15.01.2020 Bulletin 2020/03**

(73) Titulaire: **ATEME**
**78140 Velizy Villacoublay (FR)**

(72) Inventeur: **MORA, Elie**
**92240 Malakoff (FR)**

(74) Mandataire: **Plasseraud IP**
**104 Rue de Richelieu**
**CS92104**
**75080 Paris Cedex 02 (FR)**

(56) Documents cités:
**US-A1- 2009 278 945     US-A1- 2009 323 808**
**US-A1- 2010 220 939**

**EP 3 594 895 B1**

## Description

La présente invention se situe dans le domaine du traitement de l'image et de la vidéo, plus précisément dans le domaine du traitement de bruit numérique d'images et de vidéos. L'invention concerne un procédé de traitement de bruit numérique d'un flux vidéo numérique appelé « débruitage ».

Les images et vidéos numériques présentées sous la forme de données numériques contiennent des informations non-désirées. Ces informations non désirées ne sont pas en lien avec l'image ou la vidéo d'origine. Lors de la transmission d'un signal numérique, il y a transport de ces informations non-désirées. Dans le domaine du traitement du signal, ces informations non-désirées sont qualifiées en tant que bruit numérique. Ce bruit numérique se matérialise dans le cas d'une image ou d'une vidéo sous la forme de détails aléatoires. Ces détails aléatoires s'ajoutent aux détails de la scène photographiée ou de la séquence filmée. La présence de bruit numérique influe sur la qualité visuelle d'une image ou d'une vidéo numérique. En effet, dans la plupart des cas il est considéré que plus la présence de bruit numérique est importante, plus la qualité visuelle est dégradée. Cependant, la présence de bruit numérique peut parfois être désirée, par exemple le grain de film peut rajouter un certain réalisme à un contenu vidéo. Outre le fait que la présence de bruit numérique dégrade la qualité d'une image ou d'une vidéo numérique, la présence de bruit numérique augmente la complexité nécessaire au traitement qui correspond à l'encodage d'une image ou d'une vidéo numérique.

Dans le domaine du traitement du signal, plusieurs types de bruits numériques existent. Par exemple, le bruit thermique peut être lié à la température du capteur utilisé, alors que le bruit communément appelé « poivre et sel » peut être dû à des erreurs de transmission de données. Le traitement utilisé pour diminuer ou supprimer le bruit d'une image ou vidéo est appelé « débruitage ». Par conséquent, dans la suite de la description de la présente invention, les termes «traitement », « filtrage » et « débruitage » sont employés avec une signification identique. À cet effet, on entend par débruiteur ou type de traitement, un filtre employé pour effectuer le débruitage, filtrage ou traitement, à savoir diminuer ou supprimer le bruit présent sur une image ou une vidéo numérique.

Un débruiteur peut être spatial, temporel, ou spatio-temporel. La terminologie pouvant être employée est donc : filtrage spatial de débruitage d'une image et filtrage temporel de dé-bruitage d'une image. Le résultat obtenu est une image filtrée spatialement dans le cas de l'utilisation d'un filtrage spatial de dé-bruitage d'une image. Lorsqu'une image est filtrée spatialement, le filtre n'utilise que les données de l'image. Dans le cas d'un filtrage temporel de dé-bruitage d'une image, le résultat est une image filtrée temporellement. Lorsqu'un filtre spatio-temporel est utilisé, le résultat obtenu est une image filtrée spatialement et temporellement. Contrairement au filtrage spatial, un filtrage temporel utilise les données des images passées et/ou futures par rapport à l'image qui doit être filtrée, appelé image courante noté $I_n$ dans la suite. Pour filtrer une image courante $I_n$ temporellement, un filtre temporel peut alors utiliser les données comprises dans les images $I_n$ et $I_{n-1}$ par exemple. Le bruit étant un signal aléatoire faiblement corrélé spatialement, et complètement non corrélé temporellement, l'utilisation des images passées et/ou futures pour débruiter l'image courante augmente l'efficacité du débruitage.

Dans le domaine du traitement de l'image et de la vidéo, l'utilisation de filtres spatio-temporels est courante. En effet, l'utilisation de tels filtres présente des avantages non négligeables. Dans un premier temps, un filtre spatio-temporel permet de filtrer spatialement et temporellement une vidéo et de combiner d'une manière avantageuse, les résultats des deux filtrages. Lors de l'estimation de mouvement effectué pour un filtrage temporel, plusieurs erreurs peuvent apparaitre. En effet, l'estimation de mouvement peut être erronée dû à un changement de scène, un mouvement qui n'est pas une translation ou un changement de luminosité par exemple. Par conséquent, il est nécessaire de mettre en place des mécanismes de protection contre ces erreurs d'estimation de mouvement. Pour un filtrage temporel, lorsque l'erreur d'estimation de mouvement est minimisée, l'efficacité du filtrage est fonction du nombre d'images considérées. C'est-à-dire que plus un filtre temporel prend en considération les images précédant et suivant une image courante $I_n$, plus l'efficacité du filtre temporel est importante.

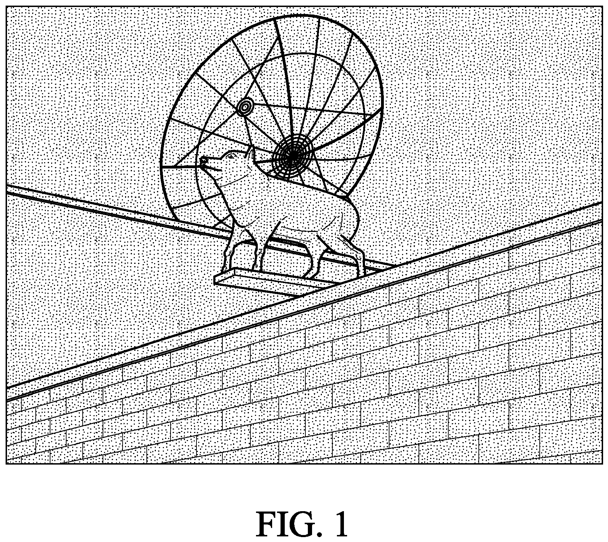

Plusieurs travaux autour de mécanismes de protection implémentés pour éviter les estimations de mouvement erronés sont proposés dans la littérature. De manière générale, le nombre d'image utilisé pour filtrer une image courante (images passées ou futurs) est limité. Ceci afin de ne pas augmenter de manière importante la complexité de l'opération de filtrage. La figure 1 représente une image originale bruitée. L'image de la figure 1 représente plusieurs bâtiments ainsi qu'une statue d'animal. Comme indiqué précédemment le bruit présent sur une image comme le montre la figure 1 est un élément indésirable. Un filtrage temporel présente une efficacité élevée. En effet, étant donné que le bruit n'est pas corrélé temporellement, l'utilisation d'un filtre temporel peut être une solution efficace de traitement de bruit. En effet, le bruit en question est souvent un bruit blanc additif avec une moyenne nulle. Soit :

- Si représentant un signal bruité issue d'un flux vidéo numérique
- $V_i$ représentant un signal non bruité issue du même flux vidéo numérique bruitée
- $B_i$ représentant le bruit à une image « i » donnée
- i représentant un entier naturel

2

Nous considérons que le bruit est blanc additif avec une moyenne nulle, nous avons alors la relation suivante :

$$S_i = V_i + B_i$$

Lorsque le signal vidéo sous-jacent est constant d'une image à l'autre, c'est-à-dire qu'il n'y a pas de mouvement alors le signal $V_i$ ne varie pas d'une image à l'autre. Par conséquent pour tout couple (i, j) d'entier naturel avec i différent de j, nous avons la relation suivante :

$$V_i = V_j = v$$

Lorsque l'on effectue la moyenne des signaux bruités issues d'un flux vidéo numérique de l'image 0 à N-1 (N désignant un entier naturel non nul), nous obtenons la relation suivante :

$$M_N = \frac{\sum_{i=0}^{N-1} S_i}{N} = \frac{\sum_{i=0}^{N-1} V_i + B_i}{N} = \frac{N * v + \sum_{i=0}^{N-1} B_i}{N} = v + \frac{\sum_{i=0}^{N-1} b_i}{N}$$

- $M_N$ représentant la moyenne des signaux bruités $S_i$ issue d'un flux vidéo numérique

Or le bruit a une moyenne nulle. Nous avons alors la relation suivante :

$$\lim_{N \to \infty} \frac{\sum_{i=0}^{N-1} B_i}{N} = 0$$

Par conséquent, en passant à la limite dans l'expression de la moyenne on obtient l'égalité suivante :

$$\lim_{N \to \infty} M_N = \lim_{N \to \infty} \frac{\sum_{i=0}^{N-1} S_i}{N} = \lim_{N \to \infty} v + \frac{\sum_{i=0}^{N-1} b_i}{N} = v$$

Par conséquent, lorsque l'on effectue la moyenne à plusieurs reprises du signal vidéo bruité temporellement ($S_i$ signal bruité issue d'un flux vidéo numérique), nous retrouvons le signal vidéo non-bruité sous-jacent ($V_i$ signal non bruité issue du même flux vidéo numérique bruité).

Cependant, il est rare qu'une séquence vidéo ne comprenne pas de mouvement. Par conséquent, il est nécessaire de pouvoir qualifier le mouvement et de l'estimer. Nous utilisons alors un procédé appelé estimation de mouvement plus connu en anglais sous le nom de « *Motion Estimation* ». Un tel procédé permet d'étudier le déplacement des objets dans une séquence vidéo, ceci en déterminant la corrélation entre deux images successive $I_n$ et $I_{n+1}$ ou $I_{n-1}$ et $I_n$, n étant un entier naturel, afin d'estimer les mouvements du contenu vidéo.

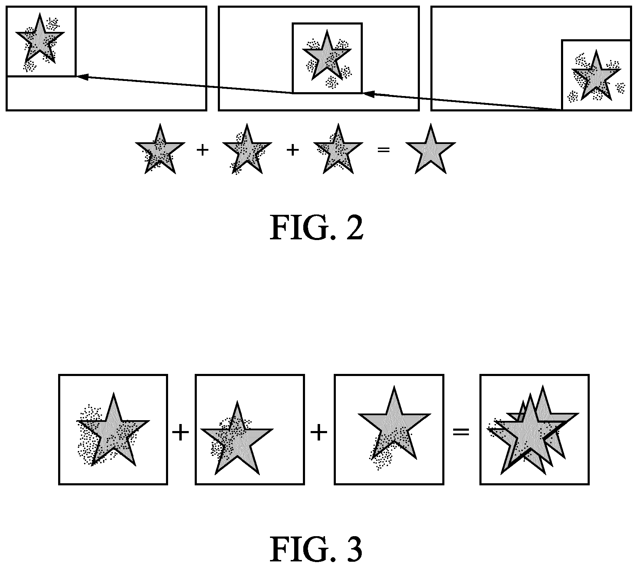

La figure 2 représente l'utilisation d'un procédé d'estimation de mouvement pour un mouvement de translation. En effet, les images de la figure 2 de droite à gauche respectivement $I_{n-1}$, $I_n$ et $I_{n+1}$ représentent le déplacement d'une étoile d'image en image. Une estimation de mouvement de translation comme représenté à la figure 2 permet de déterminer la position d'un objet dans une trame passée et une trame future.. La trajectoire de la position de l'étoile de l'image $I_{n-1}$ à l'image $I_{n+1}$ est représentée par vecteurs : un premier vecteur représentant le déplacement de l'étoile de l'image $I_{n-1}$ à l'image $I_n$, un deuxième vecteur représentant le déplacement de l'étoile de l'image $I_n$ à l'image $I_{n+1}$. Les points représentés autour et sur l'étoile de chaque image $I_{n-1}$, $I_n$ et $I_{n+1}$ représentent le bruit présent sur chaque image. Il est facile de constater que le bruit diffère d'une image à l'autre. En effet, la répartition du bruit présent sur les images $I_{n-1}$, $I_n$ et $I_{n+1}$ est différente. Cependant, comme indiqué sur la figure 2, nous constatons que lorsque nous effectuons une moyenne temporelle des images $I_{n-1}$, $I_n$ et $I_{n+1}$, nous retrouvons alors une image non bruitée. Cependant, cette opération est possible uniquement dans le cas où l'estimation de mouvement est parfaite. En effet, de manière générale, plusieurs paramètres influent l'estimation de mouvement empêchant ainsi une estimation de mouvement totale. Les paramètres suivant peuvent influer une estimation de mouvement au sein d'une séquence vidéo : une modification de la luminosité, un changement de scène, un mouvement qui n'est pas exactement une translation. Par conséquent, il est donc nécessaire de pouvoir déterminer lorsque le contenu diffère d'une image à l'autre afin de ne pas effectuer d'opération de moyenne sur une série d'image au contenu différent.

La figure 3 représente un exemple de dédoublement de contour. Les images de la figure 3 de gauche à droite

sont respectivement $I_{n-1}$, $I_n$, $I_{n+1}$ et $I_{TOT}$. Ces images désignent plus précisément des blocs des images $I_{n-1}$, $I_n$, $I_{n+1}$ et $I_{TOT}$. Chaque bloc des images $I_{n-1}$, $I_n$, et $I_{n+1}$ représente une étoile avec une position et un bruit différents. En effet, le bruit est réparti différemment sur chaque bloc des images $I_{n-1}$, $I_n$, $I_{n+1}$. Le bloc de l'image $I_{TOT}$ correspond au bloc de l'image obtenue après avoir effectué une moyenne temporelle sur les blocs des images $I_{n-1}$, $I_n$, $I_{n+1}$. Nous pouvons remarquer que sur le bloc de l'image $I_{TOT}$, le bruit n'a pas été réduit et qu'il y a de plus un dédoublement de contour à partir des blocs des images $I_{n-1}$, $I_n$, $I_{n+1}$. En effet, contrairement au cas de la Figure 2, l'étoile n'est pas parfaitement colocalisée dans chacun des blocs : dans le bloc de l'image $I_{n-1}$, l'étoile est au centre, dans le bloc de l'image $I_n$, l'étoile est légèrement en bas à gauche, et dans le bloc de l'image $I_{n+1}$ l'étoile est légèrement en haut à droite. Cela peut s'expliquer par une estimation de mouvement qui n'est pas parfaite. Par conséquent, il est possible d'en déduire que l'opération temporelle effectuée sur les blocs des images $I_{n-1}$, $I_n$, $I_{n+1}$ n'est pas adaptée. En effet, dans un tel cas, un filtrage spatial semble plus adapté. L'utilisation d'un filtre permettant d'obtenir une image filtrée temporellement et spatialement semble donc généralement plus adaptée. En effet, l'utilisation d'un tel filtre permet de choisir le type de filtrage : spatial ou temporel en fonction du contenu d'une scène au sein d'une séquence vidéo. De plus, un tel filtre permet également d'effectuer les deux types de filtrages : spatial et temporel afin de combiner une image filtrée temporellement et une image filtrée spatialement.

L'efficacité d'un filtre temporel augmente en fonction du nombre d'images considérées pour réaliser le filtrage. En effet, comme mentionné précédemment, un filtrage temporel utilise les données des images passées et futures par rapport à l'image qui doit être filtrée : l'image courante. En contrepartie, la vitesse d'exécution d'un tel filtre augmente aussi en fonction du nombre d'opérations d'estimation de mouvement effectués. En effet, un nombre trop important d'opérations d'estimation de mouvement peut diminuer de manière significative la vitesse d'exécution d'un tel filtre. Ceci est particulièrement limitant pour des filtrages effectués avant un encodage en temps réel. En effet, dans une telle situation, le traitement temps réel d'une telle séquence vidéo risque de ne pas être respecté.

Dans la littérature, plusieurs mécanismes ont été implémentés au niveau des filtres spatio-temporels afin de surmonter les difficultés mentionnées ci-dessus. Cependant, la performance de tels mécanismes est discutable. En effet, ces mécanismes s'appuient généralement sur l'utilisation d'un critère unique tel qu'une différence de valeurs de pixels ou une somme de distorsion absolue.

Une solution proposée par l'art antérieur consiste à effectuer une estimation de mouvement entre :

- une trame courante à un instant t dénommé F ;
- deux trames passées à des instant t-1 et t-2 ;
- deux trames futures à des instantes t+1 et t+2.

Une compensation de mouvement par bloc est ensuite effectuée afin de produire quatre trames de prédiction $F_{-2}$, $F_{-1}$, $F_1$, et $F_2$. A chaque fois, et pour chaque bloc, un critère basé sur une somme de distorsion absolue est utilisé, ainsi :

- si la somme de distorsion absolue est inférieure à un seuil, la prédiction du bloc suit le vecteur de mouvement estimé ;

- si la somme de distorsion absolue est supérieure au seuil, la prédiction est égale au bloc courant ;

Une combinaison linéaire entre les trames résultantes $F_{-2}$, $F_{-1}$, $F_1$, et $F_2$ et deux trames filtrés spatialement uniquement $F_{SP1}$ et $F_{SP2}$ fournit ainsi une trame résultante qui correspond au filtrage de F. Cependant, une telle solution présente deux inconvénients : le filtrage temporel est restreint uniquement à quatre instants temporels, et le critère basé sur une somme de distorsion absolue est peu suffisant pour valider ou invalider une correspondance temporelle.

Une autre solution proposée par l'art antérieur consiste à effectuer un filtrage temporel pixel par pixel. Pour un pixel donné « P », les vecteurs correspondants au bloc contenant ce pixel, ainsi qu'aux blocs voisins, sont moyennés entre eux. Ceci afin d'obtenir un vecteur et par conséquent un pixel « R » qui correspond au pixel courant dans une image passée.

Une autre proposition de l'art antérieur consiste à effectuer la moyenne de l'ensemble des pixels correspondants au pixel courant donnés par ces vecteurs afin d'obtenir le pixel « R ». La valeur filtrée est ensuite obtenue par l'opération suivante O = P - F(P - R). F désigne alors une fonction avec comme donnée d'entrée la différence entre P et R. Lorsque cette différence est trop importante, F(P - R) est égale à 0 et par conséquent O = P. F peut dépendre également du pas de quantification si le débruitage est appliqué après encodage et décodage. Dans un tel cas, le pas de quantification est déterminé à partir du train binaire. Cependant, la prise en compte d'une simple différence de valeur de pixel reste un mécanisme de protection temporel relativement basique. En outre, le filtrage temporel présente une efficacité limité car un tel filtrage est restreint à une seule trame passée.

Dans une solution alternative proposée par l'art antérieur, un filtrage temporel est effectué à l'aide d'une seule image de référence. Un critère de corrélation permet d'indiquer si il y a ou non une corrélation entre l'image courante et l'image de référence. Par exemple dans le cas d'un changement de scène, le critère de corrélation indiquera qu'il n'y pas de corrélation entre l'image courante et l'image de référence. Par conséquent, dans un tel cas, le filtrage temporel n'est pas effectué. Dans le cas contraire, pour chaque bloc de l'image courante, un critère de corrélation cette fois-ci par bloc est calculé. Si ce critère indique peu ou pas de corrélation, le filtrage temporel n'est pas effectué pour ce bloc. Dans le cas contraire, un filtrage temporel est effectué pixel par pixel, avec une force adaptée pour chaque pixel. Malgré deux niveaux de protections contre les erreurs temporelles : au niveau de l'image et au niveau du bloc, les critères sont uniquement basés sur une somme de distorsion absolue. D'après ce qui précède, l'efficacité d'une telle solution est donc limitée. De plus, une seule image de référence est utilisée pour le filtrage de l'image courante pour limiter la complexité du filtrage.

La demande de brevet américain publiée sous le numéro US 2010/220939 A1 décrit des procédés et dispositifs de filtrage spatio-temporel fondés sur les contours. La demande de brevet américain publiée sous le numéro US 2009/323808 A1 décrit des procédés et dispositifs de filtrage à compensation de mouvement de signaux vidéo. La demande de brevet américain publiée sous le numéro US 2009/278945 A1 décrit des procédés et dispositifs de stabilisation d'image utilisant des captures multiples d'image.

La présente invention vient améliorer la situation.

À cet effet, un premier aspect de l'invention concerne un procédé, mis en oeuvre par des moyens informatiques, de traitement de bruit d'un flux vidéo numérique comprenant une série d'images successives, tel que défini par la revendication 1.

Plusieurs instants temporels sont utilisés pour filtrer une partie d'image, tout en effectuant une seule estimation de mouvement par image. Par conséquent, l'efficacité du filtrage temporel est augmentée sans augmenter la complexité du filtre. La présente invention est donc particulièrement avantageuse pour filtrer un contenu vidéo avant encodage en temps réel.

La présente invention propose de construire progressivement une image purement filtrée temporellement qui correspond à une moyenne pondérée de l'ensemble des images passées qui précèdent une image courante.

Les indices de confiance $\alpha_n$ [B] proposés permettent de contrôler l'opération de moyenne effectuée en fonction d'une pluralité de critères.

En outre, l'expression de $\alpha_n$ [B] proposée permet de réinitialiser la moyenne temporelle qui est en train d'être déterminée, si la corrélation temporelle P[B] est faible. Cela permet de protéger le reste des images de l'influence des images passées non-corrélées dans le résultat final.

La présente invention permet de tirer efficacement profit des avantages des deux types de filtrage : spatial et temporel.

Un deuxième aspect de l'invention concerne un programme informatique tel que défini par la revendication 8.

Un troisième aspect de l'invention concerne un dispositif de traitement de bruit d'un flux vidéo numérique tel que défini par la revendication 9.

D'autres caractéristiques et avantages de la présente invention ressortiront de la description ci-dessous, en référence aux figures annexées qui en illustrent un exemple de réalisation dépourvu de tout caractère limitatif et sur lesquelles :

- La figure 1 représente une image originale bruitée;
- la figure 2 représente une estimation de mouvement pour un mouvement de translation;
- La figure 3 représente un exemple de dédoublement de contour ;
- La figure 4 représente une estimation de mouvement suite à un filtrage spatial ;
- La figure 5 représente une estimation de mouvement parfaite;
- La figure 6 représente un changement de scène ;
- La figure 7 représente la désocclusion d'un objet lors d'un changement d'image ;
- La figure 8 illustre des étapes du procédé de traitement de bruit selon un mode de réalisation de l'invention ; et
- La figure 9 illustre un dispositif selon un mode de réalisation de l'invention.

La présente invention concerne un filtre spatio-temporel permettant d'obtenir une image filtrée temporellement et spatialement. Dans la suite on considérera équivalent entre eux les termes suivants :

- filtre spatial et filtre spatial de dé-bruitage ;
- filtrage spatial et filtrage spatial de dé-bruitage ;
- filtre temporel et filtre temporel de dé-bruitage ;
- filtrage temporel et filtrage temporel de dé-bruitage ;

La présente invention peut se découper en trois étapes majeures : deux étapes de filtrage (spatial et temporel) et une étape de combinaison de l'image filtrée spatialement et de l'image filtrée temporellement.

Nous allons définir certaines notations utilisées dans la présente description :

- $I_n$ = image courante à l'instant temporel « n »,
- $D_n$ = image courante à l'instant temporel « n » débruitée spatialement avec un débruiteur spatial ou filtre spatial « D »,
- $S_n$ = image préfiltrée spatialement avec le filtre spatial S
- $T_n$ = carte temporelle à l'instant temporel « n » et
- $R_n$ = image filtrée spatio-temporellement

L'étape de filtrage spatial peut consister à utiliser un filtre spatial D afin de filtrer une image courante $I_n$. Dans cette étape, le choix du filtre a une certaine importance. En effet, le but de cette étape de filtrage spatial est de débruiter l'image tout en limitant le nombre d'artefacts que ce filtrage risque de provoquer, à savoir du flou. Si le filtre temporel utilisé par la suite n'est pas efficace, il est important que l'étape de filtrage spatial limite au maximum le bruit. Cela justifie l'importance accordé au choix du filtre spatial. Une fois l'image courante $I_n$ filtrée spatialement avec un filtre spatial D, une image $D_n$ est obtenue.

L'étape de filtrage temporelle peut se diviser en plusieurs sous étapes. Par exemple, Un deuxième filtre spatial S peut être utilisé pour filtrer spatialement l'image courante et ainsi obtenir une image $S_n$. Cette sous étape peut être optionnelle. En effet, il est possible d'utiliser l'image filtrée spatialement $D_n$ à l'aide du filtre spatial D. Dans un tel cas, $D_n = S_n$.

Lors de l'étape de filtrage temporelle, une estimation de mouvement dénommée en anglais « *Motion Estimation* » est effectuée entre les images $S_n$ et $S_{n-1}$. Le résultat de cette estimation de mouvement est un vecteur de mouvement pour chaque bloc de l'image courante $S_n$. Un tel vecteur permet d'estimer le mouvement d'un objet au sein de la séquence vidéo entre les images $S_n$ et $S_{n-1}$.

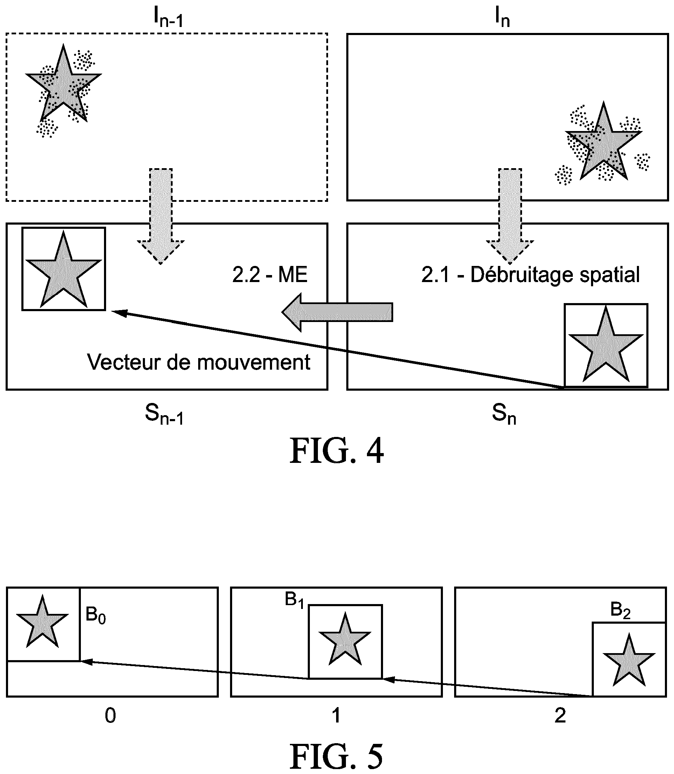

La figure 4 représente l'obtention de l'image $S_n$ à partir d'une image courante $I_n$ à l'aide de l'utilisation d'un filtre spatial S. En effet, l'image courante $I_n$ située en haut à droite de la figure 4 représente un contenu en forme d'étoile bruité. L'application du filtre spatial S permet d'obtenir une image $S_n$ situé en bas à droite de la figure 4 qui correspond au contenu de l'image $S_n$ débruité spatialement. De la même manière l'application d'un filtre spatial S sur l'image $I_{n-1}$ situé en haut à gauche de la figure 4 permet d'obtenir l'image filtrée spatialement $S_{n-1}$ située en bas à gauche de la figure 4. L'estimation de mouvement est effectuée entre les images $S_{n-1}$ et $S_n$ c'est-à-dire à partir des images débruitées spatialement. Le vecteur issu de l'image $S_n$ à destination de l'image $S_{n-1}$ correspond au vecteur de mouvement représentant le mouvement du contenu en forme d'étoile entre les deux images $S_n$ et $S_{n-1}$. Le bruit présent sur les images originales $I_n$ et $I_{n-1}$ peut perturber le processus d'estimation de mouvement. Par conséquent, il est préférable de filtrer les images $I_n$ et $I_{n-1}$ spatialement avant d'effectuer l'estimation de mouvement. En effet, une estimation de mouvement effectuée sur des images bruitées peut conduire à l'obtention d'un vecteur de mouvement erroné. Ainsi, l'utilisation d'un filtre spatial sur les images $I_n$ et $I_{n-1}$ avant l'estimation de mouvement permet de réduire le bruit et permet d'obtenir une meilleure correspondance entre les images $S_n$ et $S_{n-1}$. L'utilisation d'un filtre spatial S avant de procéder à l'estimation de mouvement a pour but de supprimer le bruit en grande partie. Cependant, il n'est pas indispensable que les images débruitées spatialement $S_{n-1}$ et $S_n$ soit entièrement débruitées. Par conséquent, le filtre spatial S peut présenter une complexité inférieure au filtre spatial D. Il peut être préférable pour le filtre spatial S d'avoir une force de débruitage plus élevée que la force de débruitage du filtre spatial D même si un débruiteur dont la force de débruitage est élevée peut impacter des détails importants sur un contenu vidéo.

Suite à l'estimation de mouvement effectuée pour chaque bloc B de l'image courante, un indice de confiance $\alpha_n[B]$ compris entre 0 et 1 est calculé. Nous considérons B* le bloc correspondant au bloc B de l'image courante $I_n$ dans l'image précédente $I_{n-1}$ pointé par le vecteur de mouvement déterminé lors de l'estimation de mouvement.

Dans le but d'effectuer un filtrage temporel, il est possible de construire une carte temporelle $T_n$. $T_n$ correspond à une image filtrée temporellement. Ainsi, un bloc B de l'image filtré temporellement $T_n$ se note $T_n[B]$ et peut s'exprimer sous la forme d'une combinaison linéaire de $T_{n-1}[B^*]$ et $I_n[B]$. Il est alors possible de considérer la relation de récurrence suivante :

$$T_n[B] = \propto_n [B] * T_{n-1}[B^*] + (1 - \propto_n [B]) * I_n[B]$$

Avec :

- $T_n[B]$ un bloc B de l'image filtré temporellement $T_n$ ;

- $T_{n-1}[B^*]$ le bloc B* correspondant au bloc B dans l'image filtrée temporellement $T_{n-1}$ ;

- $\alpha_n[B]$ un indice de confiance compris entre 0 et 1 ;

- $I_n[B]$ le bloc B de l'image courante $I_n$.

L'initialisation d'une telle relation de récurrence pour n =0, c'est-à-dire pour la première image est :

$$T_0[B] = I_0[B] \quad \text{et} \quad \propto_0 [B] = 0 \text{ pour tous les blocs de l'image}$$

Le calcul de l'indice de confiance $\alpha_n[B]$ pour un entier n supérieur ou égal à 1 peut être effectué en deux étapes :

- Un poids désigné par « P[B] » ($0 \leq P[B] \leq 1$) peut être calculé.

Le calcul de P[B] peut être effectué à partir de critère permettant de mesurer la corrélation entre les blocs B et B* décrits précédemment. Ceci dans le but d'évaluer l'estimation de mouvement effectuée et la pertinence du résultat obtenu, c'est-à-dire le vecteur de mouvement.

- L'indice de confiance $\alpha_n[B]$ peut ensuite se calculer avec la formule suivante :

$$\propto_n [B] = P[B] * clip(s + v * \propto_{n-1} [B^*], 0, 1)$$

Avec :

-

$$clip(x, min, max) = \begin{cases} \min si\ x < min \\ \max si\ x > max \\ x\ sinon \end{cases}$$

- « s » est un offset,

- « v » une vitesse d'apprentissage ($0 \leq s \leq 1$ et $0 \leq v \leq 1$).

Lorsque tous les blocs B de l'image filtrée temporellement $T_n$ se notant $T_n[B]$ ainsi que les indices de confiances associées $\alpha_n[B]$ ont été déterminés, il est alors possible de rassembler les résultats obtenus par l'image filtrée temporellement $T_n$ et l'image filtrée spatialement $D_n$.
La combinaison des images filtrées spatialement $D_n$ et temporellement $T_n$ se note $R_n$.
L'image $R_n$ filtrée temporellement et spatialement peut s'exprimer sous la forme suivante, n désignant un entier naturel :

$$R_n[B] = \propto_n [B] * T_n[B] + (1 - \propto_n [B]) * D_n[B]$$

Pour la première image, c'est-à-dire pour n=0, nous avons la relation suivante :

$$R_0[B] = D_0[B]$$

Par conséquent, la première image est uniquement filtrée spatialement à l'aide du filtre spatial D.
La figure 5 représente une estimation de mouvement parfaite. Trois images 0, 1 et 2 sont représentées sur la figure 5. Chaque image comprend un contenu sous la forme d'une étoile qui déplace en translation de l'image 0 à l'image 1 et de l'image 1 à l'image 2. Chaque image 0, 1 et 2 comprend respectivement un bloc $B_0$, un bloc $B_1$ et un bloc $B_2$.
Dans cet exemple, les valeurs de l'offset s et de la vitesse d'apprentissage v sont égales à 0.5. L'estimation de mouvement étant parfaite, la corrélation temporelle est alors maximale. P[B] permet de mesurer la corrélation entre les blocs. La corrélation étant maximale, P[B] est alors égale à 1.
Pour le bloc $B_1$ de l'image 1, le calcul de l'indice de confiance fournit alors le résultat :

$$\propto_1 [B_1] = 0.5$$

En remplaçant la valeur de l'indice de confiance égale à 0.5 dans l'expression de $T_n$, on obtient alors le résultat suivant :

$$T_1[B_1] = 0.5 * I_0[B_0] + 0.5 * I_1[B_1]$$

Pour le bloc $B_2$ de l'image 2, le calcul de l'indice de confiance s'exprime alors :

$$\propto_2 [B_2] = 0.5 + 0.5 * \propto_1 [B_1] = 0.5 + 0.25 = 0.75$$

En remplaçant la valeur de $\propto_2 [B_2]$ et de $T_1[B_1]$ dans l'expression de $T_1[B_1]$, on obtient alors :

$$T_2[B_2] = 0.75 * T_1[B_1] + 0.25 * I_2[B_2] = 0.375 * I_0[B_0] + 0.375 * I_1[B_1] + 0.25 * I_2[B_2]$$

D'où :

$$T_2[B_2] = 0.375 * I_0[B_0] + 0.375 * I_1[B_1] + 0.25 * I_2[B_2]$$

Par conséquent, il est possible d'en déduire que $T_2[B_2]$ qui correspond au bloc $B_2$ de l'image filtrée temporellement $T_n$ comprend les blocs $B_0$, $B_1$ et $B_2$ des images originales $I_0$, $I_1$ et $I_2$ associée à un coefficient.

$T_n$ semble correspondre à une accumulation de plusieurs parties d'images passées avec coefficients ce qui semble constituer une moyenne pondérée.

Le calcul pour les blocs $B_3$, $B_4$ et $B_5$ fournit les valeurs d'indice de confiance suivants :

$$\propto_3 [B_3] = 0.875 , \propto_4 [B_4] = 0.9375 , \propto_5 [B_5] = 0.96875$$

$\alpha_n[B]$ est compris entre 0 et 1. Par conséquent, il semble que plus n est élevé, plus l'indice de confiance converge vers 1 c'est-à-dire que la limite de $\alpha_n[B]$ lorsque n tend vers l'infini est égale à 1 : $\lim_{n \to \infty} \propto_n = 1$

Or, l'image filtrée temporellement et spatialement $R_n$ s'exprime sous la forme :

$$R_n[B] = \propto_n [B] * T_n[B] + (1 - \propto_n [B]) * D_n[B]$$

Par conséquent, lorsque n tend vers l'infini dans l'équation ci-dessus, on obtient :

$$\lim_{n \to \infty} R_n[B] = 1 * T_n[B] + (1 - 1) * \lim_{n \to \infty} D_n[B]]$$

Nous avons alors :

$$\lim_{n \to \infty} R_n[B] = T_n[B]$$

Par conséquent, il est possible d'en déduire que plus n est grand, moins le filtrage spatial intervient lorsque l'estimation de mouvement est performante.

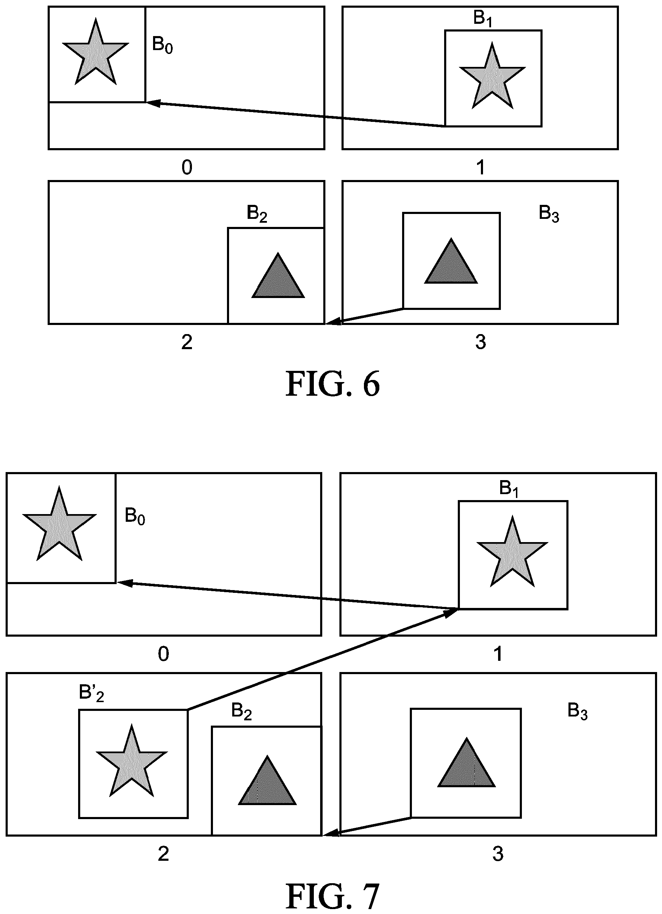

La figure 6 représente quatre images : 0, 1, 2 et 3. Chaque image comprend un bloc respectif $B_0$, $B_1$, $B_2$ et $B_3$. Les images 0 et 1 représentent la même scène c'est-à-dire un contenu étoilé qui se déplace de l'image 0 à 1. Les images 2 et 3 représentent une scène différente avec un contenu différent en triangle qui se déplace également d'une image 3 à une image 2. P[B] permet de mesurer la corrélation entre les blocs. Or il y a un changement de scène à partir de l'image 2, la corrélation est donc minimale, c'est-à-dire que P = 0 pour tous les blocs de l'image 2. Pour les autres blocs, c'est-à-dire les blocs $B_0$, $B_1$ et $B_3$, on considère que l'estimation de mouvement est parfaite et que par conséquent la corrélation est maximale, P[B] est alors égale à 1.

En considérant les valeurs de P définis ci-dessus, le calcul de $\propto_n [B]$ , $T_n[B]$ et $R_n[B]$ fournit alors :

$$\propto_1 [B_1] = 0.5 \quad \to \quad T_1[B_1] = 0.5 * I_0[B_0] + 0.5 * I_1[B_1]$$

$$\propto_2 [B_2] = 0 \ \rightarrow T_2[B_2] = I_2[B_2] \rightarrow R_2[B_2] = D_2[B_2]$$

$$\propto_3 [B_3] = 0.5 + 0.5 *\propto_2 [B_2] = \ 0.5$$

$$T_3[B_3] = 0.5 * T_2[B_2] + 0.5 * I_3[B_3] = 0.5 * I_2[B_2] + 0.5 * I_3[B_3]$$

D'où :

$$T_3[B_3] = 0.5 * I_2[B_2] + 0.5 * I_3[B_3]$$

Dans l'expression de $T_3[B_3]$ , il est possible de remarquer que les termes $I_0[B_0]$ et $I_1[B_1]$ n'interviennent pas. Par conséquent, connaissant l'expression de $R_n$ décrit ci-dessus, il est possible d'en déduire, par transitivité que les termes $I_0[B_0]$ et $I_1[B_1]$ n'apparaissent pas dans l'expression de $R_3[B_3]$. Cela peut se justifier par la corrélation temporelle. En effet, sur la figure 4, il y a un changement de scène entre les images 1 et 2. Par conséquent, la scène représentée sur les images 0 et 1 est complètement différente de la scène représentée sur les images 2 et 3. Les images 0 et 1 ne peuvent donc intervenir dans l'expression de $T_3[B_3]$ et de $R_3[B_3]$. En effet, aucune corrélation temporelle ne peut être exploitée avec ces images. Par conséquent, pour le filtrage temporel d'images suivants un changement de scène, les images précédentes ne peuvent être prises en compte. En effet, il n'y a plus aucune corrélation temporelle.

La figure 7 représente la désocclusion d'un objet lors d'un changement d'image. La figure 7 comporte quatre images 0, 1, 2 et 3. Chaque image comprend respectivement un bloc $B_0$, un bloc $B_1$, un bloc $B_2$ et un bloc $B_3$. Le mécanisme de réinitialisation de la moyenne correspondant au calcul de $T_n[B]$ observé à la figure 6 est plus précis. En effet, un tel mécanisme est appliqué au niveau d'un bloc de l'image, c'est-à-dire qu'un poids P est calculé pour chaque bloc de l'image. Cela permet alors de gérer des occlusions et désocclusions ponctuelles. En effet, l'exemple précédent de la figure 6 illustrait un changement de scène complet. Cependant, il est possible qu'un objet soit supprimé ou ajouté d'une scène à l'autre. La figure 7 représente une telle situation. En effet, lors du passage de l'image 1 à l'image 2, un contenu en forme de triangle est ajouté. En revanche, lors du passage de l'image 2 à l'image 3, un contenu en forme d'étoile est supprimé. Dans un tel cas, le calcul de $T_2[B_2]$ et $T_3[B_3]$ est le même que celui effectué pour la figure 6. Par contre, pour le calcul de $T_2[B'_2]$ de la figure 7 on obtient :

$$\propto_2 [B'_2] = 0.5 + 0.5 *\propto_1 [B_1] = 0.75$$

$$T_2[B'_2] = 0.75 * T_1[B_1] + 0.25 * I_2[B'_2] = 0.375 * I_0[B_0] + 0.375 * I_1[B_1] + 0.25 * I_2[B'_2]$$

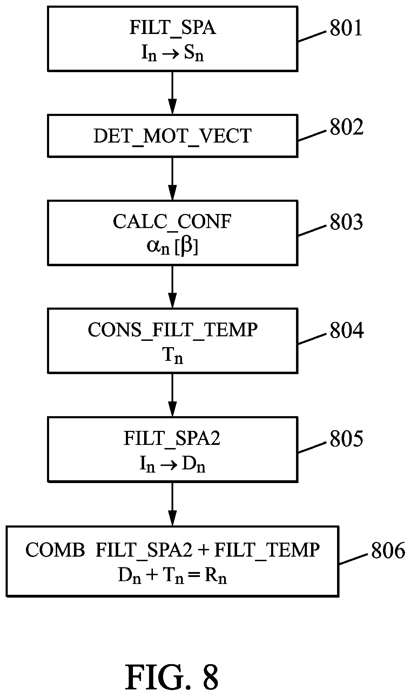

La figure 8 illustre des étapes du procédé de traitement de bruit selon un mode de réalisation de l'invention. Le traitement de bruit est appliqué à un flux vidéo numérique qui comprend une série d'images successives. À une étape FILT_SPA 801, une image courante $I_n$ est filtrée spatialement à l'aide d'un filtre spatial S pour obtenir une image filtrée spatialement $S_n$. L'étape DET_MOT_VECT 802 est une étape d'estimation de mouvement où un vecteur de mouvement est déterminé. Une telle étape permet d'étudier le déplacement des objets dans le flux vidéo numérique. Cela en cherchant la corrélation entre deux images successives afin d'estimer le changement de position du contenu à l'aide d'un vecteur de mouvement. La détermination du vecteur de mouvement est effectuée pour chaque bloc B de l'image $S_n$. En effet, comme précisé précédemment, afin d'augmenter la pertinence de l'estimation de mouvement, il est préférable de filtrer l'image spatialement dans un premier temps. La détermination du vecteur de mouvement est effectuée pour chaque bloc B de l'image $S_n$ à partir d'une seule image $S_{n-1}$. L'image $S_{n-1}$ est l'image précédant l'image $S_n$ dans la série d'images numériques. À l'étape CALC_CONF 803, un indice de confiance $\alpha_n[B]$ est calculé pour chaque bloc de l'image courante $I_n$ à partir du vecteur de mouvement estimé. Un tel calcul a été décrit précédemment dans la présente demande, notamment en référence à la figure 4. L'indice de confiance $\alpha_n[B]$ représente la corrélation temporelle entre les blocs de l'image $S_n$ et les blocs de l'image $S_{n-1}$. Le filtre temporel $T_n$ est construit à l'étape CONS_FILT_TEMP 804. Un tel filtre est construit à partir des indices de confiance $\alpha_n[B]$ calculés. L'étape FILT_SPA2 805 consiste en un filtrage spatial de l'image courante $I_n$ de la série pour obtenir une image filtrée spatialement $D_n$, $D_n$ pouvant être égale à $S_n$. L'image filtrée temporellement $T_n$ obtenue est ensuite combiné à l'image filtrée spatialement $D_n$ afin d'obtenir une image $R_n$ filtrée spatialement et temporellement à l'étape COMB FILT_SPA + FILT_TEMP 806. $R_n$ est ainsi obtenue par application d'une fonction combinant l'image filtrée temporellement $T_n$ et l'image filtrée spatialement $D_n$.

Nous décrivons ici une mise en oeuvre de l'invention pour un mode particulier de réalisation. Pour l'étape de filtrage spatial, on utilise un filtre spatial D = un débruiteur spatial FFT2D avec le jeu de paramètres suivants :

- Taille de bloc = 32, taille de l'overlap = 16, force = 4.

Ce filtre spatial D possède une complexité moyenne et est relativement efficace.

Afin de maximiser la performance de l'estimation de mouvement et notamment la détermination des vecteurs de mouvement pour chaque bloc d'image, un filtre spatial S est utilisé avec S = un débruiteur FFT2D. S peut être moins efficace et plus rapide que le premier filtre spatial D.

Le jeu de paramètres est le suivant : taille de bloc = 32, taille de l'overlap = 8, force = 16. La force du débruitage du filtre spatiale S est en effet augmentée afin que le filtre spatial S supprime le plus de bruit possible. En effet, comme expliqué précédemment, la présence de bruit trop important peut perturber l'estimation de mouvement et notamment la détermination des vecteurs de mouvements.

Une estimation de mouvement par blocs de taille 16x16 adjacents est effectuée. Il est à noter que les blocs ne se couvrent pas entre eux. Tous les traitements ultérieurs seront effectués par bloc 16x16.

- Un poids désigné par « P[B] » ($0 \leq P[B] \leq 1$) peut être calculé.

Le calcul de P[B] ($0 \leq P[B] \leq 1$) est ensuite effectué. P[B] permet de mesurer la corrélation entre les blocs. Ceci dans le but de pouvoir évaluer l'estimation de mouvement effectuée. L'ensemble des vecteurs de mouvement déterminés lors de l'étape d'estimation de mouvement sont fournis en entrée d'un algorithme de détection de changements de scène.

Le résultat obtenu est binaire : si un changement de scène est détecté, P = 0 pour tous les blocs de l'image. Dans le cas contraire, pour chaque bloc B (B* étant sa correspondance dans l'image passée) :
Une somme de distorsion absolue entre B et B* est calculée

$$SAD(B, B^*) = \sum_i \sum_j \left| B_{i,j} - B_{i,j}^* \right|$$

Avec : $B_{i,j}$ le pixel à la position (i,j) dans le bloc B

L'autosad de B est ensuite calculée :

$$autosad(B) = \frac{\sum_i \sum_j \left| B_{i,j} - B_{i+1,j} \right| + \sum_i \sum_j \left| B_{i,j} - B_{i,j+1} \right|}{2}$$

Finalement, P[B] est ensuite calculé par la formule suivante :

$$P[B] = clip\left(1 - \frac{SAD}{2000}, 0, 1\right) * clip\left(3 - \frac{SAD}{autosad}, 0, 1\right)$$

Comme détaillé précédemment, notamment en référence à la figure 8, Les filtres spatiaux D et S peuvent être identiques ou différents. Le même filtre spatial peut être employé avec un jeu de paramètres différents. Un exemple de filtres spatiaux : Filtre gaussien, FFT2D, FFT3DFilter avec un mode purement spatial, filtre de moyenne ou filtre bilatéral.

Les blocs B des images mentionnées précédemment lors de l'estimation de mouvement, du calcul de P[B], de $\alpha_n[B]$, de $T_n[B]$, et de $R_n[B]$) peuvent être adjacents entre eux. Cependant les blocs B des images peuvent également se recouvrir afin d'éviter des artefacts de frontières visibles de blocs. Il est possible de subdiviser les blocs de manières différentes.

L'indice de confiance a été défini de la manière suivante :

$$\propto_n [B] = P[B] * clip(s + v * \propto_{n-1} [B^*], 0, 1)$$

Le facteur « s » ($0 \leq s \leq 1$) défini en tant qu'offset correspond au poids initial associé au passé pour l'opération du filtrage temporel.

Le facteur « v » ($0 \leq v \leq 1$)) défini en tant que vitesse d'apprentissage représente la vitesse d'augmentation du poids s en fonction du temps.

Le tableau suivant représente un exemple, pour différentes combinaisons (s, v), le poids pour les dix premières images dans le cas d'une estimation de mouvement parfaite, c'est-à-dire que P = 1 tel que décrit à la figure 5 par exemple. Il est donc possible d'adapter ces paramètres en fonction de l'application souhaitée.

|           | s = 0.5 et v = 0.5 | s = 0.5 et v = 0.8 | s = 0.2 et v = 0.8 |
|-----------|--------------------|--------------------|--------------------|
| Image 1   | 0.500000           | 0.500000           | 0.200000           |
| Image 2   | 0.750000           | 0.900000           | 0.360000           |
| Image 3   | 0.875000           | 1.000000           | 0.488000           |
| Image 4   | 0.937500           | 1.000000           | 0.590400           |
| Image 5   | 0.968750           | 1.000000           | 0.672320           |
| Image 6   | 0.984375           | 1.000000           | 0.737856           |
| Image 7   | 0.992188           | 1.000000           | 0.790285           |
| Image 8   | 0.996094           | 1.000000           | 0.832228           |
| Image 9   | 0.998047           | 1.000000           | 0.865782           |
| Image 10  | 0.999023           | 1.000000           | 0.892626           |

Le calcul de P[B] peut être effectué à partir de critère permettant de mesurer la corrélation entre les blocs B. Ceci dans le but d'évaluer la précision du vecteur de mouvement obtenu suite à l'estimation de mouvement. Les critères permettant de calculer P[B] sont par exemple la somme de distorsion absolue, le rapport somme de distorsion absolue sur autosad ou la cohérence du champs de vecteurs de mouvement.

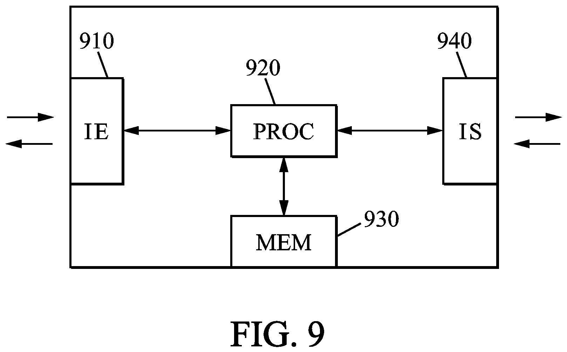

L'invention peut être mise en oeuvre par un dispositif informatique, tel qu'illustré à titre d'exemple sur la figure 9, lequel comporte un circuit de traitement incluant :

- une interface d'entrée 910, pour recevoir les données d'image à traiter,

- un processeur 920 coopérant avec une mémoire 930, pour traiter les données d'image reçues, et

- une interface de sortie 940 pour délivrer les données d'image traitées par la mise en oeuvre du procédé ci-avant.

La mémoire précitée 930 peut stocker typiquement des codes d'instructions du programme informatique au sens de l'invention (dont un exemple d'ordinogramme est présenté sur la figure 8 commentée précédemment). Ces codes d'instructions peuvent être lus par le processeur 920 pour exécuter le procédé selon l'invention. Le dispositif peut comporter en outre une mémoire de travail (distincte ou identique à la mémoire 930) pour stocker des données temporaires, notamment les métriques d'intérêts calculées.

L'invention ne se limite pas aux exemples de modes de réalisation décrits ci-avant, seulement à titre d'exemple, mais elle englobe toutes les variantes que pourra envisager l'homme de l'art dans le cadre des revendications ci-après. Par exemple, l'invention n'est pas limitée pas à l'utilisation d'une ou deux métriques d'intérêt comme décrit dans les modes de réalisation ci-dessus.

**Revendications**

1. Procédé, mis en oeuvre par des moyens informatiques, de traitement de bruit d'un flux vidéo numérique comprenant une série d'images successives, le procédé comprenant :

   - effectuer un filtrage spatial de dé-bruitage d'une image courante d'indice n $I_n$ de la série pour obtenir une image filtrée spatialement $S_n$, l'indice n étant un entier naturel ;
   - déterminer un vecteur de mouvement respectif pour chaque bloc de pixels de l'image $S_n$ à partir d'une seule image $S_{n-1}$ obtenue par filtrage spatial de dé-bruitage de l'image $I_{n-1}$ précédant l'image $I_n$ dans la série d'images ;
   - calculer un indice de confiance respectif $\alpha_n[B]$ pour chaque bloc B de l'image $I_n$ à partir du vecteur de mouvement respectif déterminé pour le bloc B, $\alpha_n[B]$ étant représentatif d'une corrélation entre le bloc B et un bloc B* de l'image $I_{n-1}$ correspondant au bloc B ;
   - construire un filtre temporel à partir des indices de confiance respectifs $\alpha_n[B]$ calculés et appliquer le filtre temporel à l'image courante $I_n$ pour obtenir une image filtrée temporellement $T_n$ ;

- effectuer un filtrage spatial de dé-bruitage de l'image courante $I_n$ de la série pour obtenir une image filtrée spatialement $D_n$, et

- obtenir une image $R_n$ filtrée temporellement et spatialement par application d'une fonction combinant l'image filtrée temporellement $T_n$ et l'image filtrée spatialement $D_n$, le procédé étant **caractérisé en ce que** l'indice de confiance respectif $\alpha_n$ [B] calculé pour le bloc B est calculé à partir d'un paramètre P[B] évaluant la corrélation entre un bloc correspondant au bloc B dans l'image $D_n$ et un bloc correspondant au bloc B* dans l'image $D_{n-1}$, Dn-1 étant obtenue par filtrage spatial de débruitage de l'image In-1, et **en ce que** l'indice de confiance $\alpha_n$ [B] s'exprime de la manière suivante :

$$\alpha_n[B] = P[B] * \text{clip}(s + v * \alpha_{n-1}[B^*], 0, 1)$$

dans lequel :

$$\text{clip}(x, \min, \max) = \begin{cases} \min \text{ si } x < \min \\ \max \text{ si } x > \max \\ x \text{ sinon} \end{cases}$$

et dans lequel :
- s désigne un décalage
- v désigne une vitesse d'apprentissage
- $\alpha_{n-1}[B^*]$ désigne un indice de confiance calculé pour le bloc B* de l'image $I_{n-1}$.

2.  Procédé selon la revendication 1, dans lequel un bloc $T_n[B]$ de l'image filtrée temporellement $T_n$ et correspondant au bloc B s'exprime sous la forme d'une combinaison linaire de $T_{n-1}[B^*]$ et $I_n[B]$, dans lequel $T_{n-1}[B^*]$ désigne un bloc de l'image filtrée temporellement $T_{n-1}$ obtenue par filtrage temporel du bloc B* de l'image $I_{n-1}$ précédant l'image $I_n$ dans la série d'images, et $I_n[B]$ désigne le bloc B de l'image $I_n$.

3.  Procédé selon la revendication 2, dans lequel le bloc $T_n[B]$ est calculé selon la formule suivante :

$$T_n[B] = \alpha_n[B] * T_{n-1}[B^*] + (1 - \alpha_n[B]) * I_n[B].$$

4.  Procédé selon la revendication 3, dans lequel pour n = 0, l'expression suivante est vérifiée pour tous les blocs $T_0[B]$ de l'image $T_0$ :

$$T_0[B] = I_0[B] \quad \text{et} \quad \alpha_0[B] = 0.$$

5.  Procédé selon la revendication 1, dans lequel $0 \leq P[B] \leq 1$ et $0 \leq \alpha_n[B] \leq 1$.

6.  Procédé selon l'une quelconque des revendications précédentes, dans lequel le bloc $R_n[B]$ correspondant au bloc B dans l'image $R_n$ filtrée temporellement et spatialement s'exprime sous la forme d'une combinaison linéaire du bloc $T_n[B]$ correspondant au bloc B dans l'image $T_n$ et du bloc $D_n[B]$ correspondant au bloc B dans l'image $D_n$ filtrée spatialement.

7.  Procédé selon la revendication 6, dans lequel le bloc $R_n[B]$ correspondant au bloc B dans l'image $R_n$ filtrée temporellement et spatialement s'exprime sous la forme suivante :

$$R_n[B] = \alpha_n[B] * T_n[B] + (1 - \alpha_n[B]) * D_n[B].$$

8.  Programme informatique comportant des instructions pour la mise en oeuvre des étapes du procédé selon l'une des revendications précédentes, lorsque ces instructions sont exécutées par un processeur.

9.  Dispositif de traitement de bruit de traitement de bruit d'un flux vidéo numérique comprenant une série d'images numériques successives, le dispositif comprenant un processeur configuré pour effectuer les opérations suivantes :

- filtrage spatial de dé-bruitage d'une image courante d'indice n $I_n$ de la série pour obtenir une image filtrée spatialement $S_n$, l'indice n étant un entier naturel ;

- détermination d'un vecteur de mouvement respectif pour chaque bloc de pixels de l'image $S_n$ à partir d'une seule image $S_{n-1}$ obtenue par filtrage spatiale de dé-bruitage de l'image $I_{n-1}$ précédant l'image $I_n$ dans la série d'images ;

- calcul d'un indice de confiance respectif $\alpha_n[B]$ pour chaque bloc B de l'image $I_n$ à partir du vecteur de mouvement respectif déterminé pour le bloc B, $\alpha_n[B]$ étant représentatif d'une corrélation entre le bloc B et un bloc B* de l'image $I_{n-1}$ correspondant au bloc B ;

- construction d'un filtre temporel à partir des indices de confiance respectifs $\alpha_n[B]$ calculés et application du filtre temporel à l'image courante $I_n$ pour obtenir une image filtrée temporellement $T_n$ ;

- filtrage spatial de dé-bruitage de l'image courante $I_n$ de la série pour obtenir une image filtrée spatialement $D_n$, et

- obtention d'une image $R_n$ filtrée temporellement et spatialement par application d'une fonction combinant l'image filtrée temporellement $T_n$ et l'image filtrée spatialement $D_n$, et le dispositif étant **caractérisé en ce que** le processeur est configuré pour également effectuer les opérations suivantes:

l'indice de confiance respectif $\alpha_n[B]$ est calculé à partir d'un paramètre P[B] évaluant la corrélation entre un bloc correspondant au bloc B dans l'image $D_n$ et un bloc correspondant au bloc B* dans l'image $D_{n-1}$, $D_{n-1}$ étant obtenue par filtrage spatial de débruitage de l'image $I_{n-1}$, et

l'indice de confiance $\alpha_n[B]$ s'exprime de la manière suivante :

$$\alpha_n[B] = P[B] * \text{clip}(s + v * \alpha_{n-1}[B^*], 0, 1)$$

dans lequel :

$$\text{clip}(x, \min, \max) = \begin{cases} \min \text{ si } x < \min \\ \max \text{ si } x > \max \\ x \text{ sinon} \end{cases}$$

et dans lequel :

- $s$ désigne un décalage
- $v$ désigne une vitesse d'apprentissage
- $\alpha_{n-1}[B^*]$ désigne un indice de confiance calculé pour le bloc B* de l'image $I_{n-1}$.

10. Dispositif selon la revendication 9, dans lequel un bloc $T_n[B]$ de l'image filtrée temporellement $T_n$ et correspondant au bloc B s'exprime sous la forme d'une combinaison linaire de $T_{n-1}[B^*]$ et $I_n[B]$, dans lequel $T_{n-1}[B^*]$ désigne un bloc de l'image filtrée temporellement $T_{n-1}$ obtenue par filtrage temporel du bloc B* de l'image $I_{n-1}$ précédant l'image $I_n$ dans la série d'images, et $I_n[B]$ désigne le bloc B de l'image $I_n$.

11. Dispositif selon la revendication 10, dans lequel le bloc $T_n[B]$ est calculé selon la formule suivante :

$$T_n[B] = \alpha_n[B] * T_{n-1}[B^*] + (1 - \alpha_n[B]) * I_n[B].$$

12. Dispositif selon la revendication 11, dans lequel pour n = 0, l'expression suivante est vérifiée pour tous les blocs $T_0[B]$ de l'image $T_0$ :

$$T_0[B] = I_0[B] \quad \text{et} \quad \alpha_0[B] = 0.$$

13. Dispositif selon la revendication 9, dans lequel $0 \leq P[B] \leq 1$ et $0 \leq \alpha_n[B] \leq 1$.

14. Dispositif selon l'une quelconque des revendications 9 à 13, dans lequel le bloc $R_n[B]$ correspondant au bloc B dans l'image $R_n$ filtrée temporellement et spatialement s'exprime sous la forme d'une combinaison linéaire du bloc $T_n[B]$ correspondant au bloc B dans l'image $T_n$ et du bloc $D_n[B]$ correspondant au bloc B dans l'image $D_n$ filtrée spatialement.

**15.** Dispositif selon la revendication 14, dans lequel le bloc $R_n[B]$ correspondant au bloc B dans l'image $R_n$ filtrée temporellement et spatialement s'exprime sous la forme suivante :

$$R_n[B] = \alpha_n[B] * T_n[B] + (1 - \alpha_n[B]) * D_n[B].$$

**Patentansprüche**

**1.** Durch Informatikmittel durchgeführtes Verfahren zur Rauschbearbeitung eines digitalen Videostreams, der eine Serie von aufeinanderfolgenden Bildern umfasst, wobei das Verfahren umfasst:

- Durchführen einer räumlichen Entrauschungsfilterung eines aktuellen Bildes mit dem Index n $I_n$ aus der Serie, um ein räumlich gefiltertes Bild $S_n$ zu erhalten, wobei der Index n eine natürliche ganze Zahl ist,
- Bestimmen eines jeweiligen Bewegungsvektors für jeden Pixelblock des Bildes $S_n$ aus einem einzelnen Bild $S_{n-1}$, das durch räumliche Entrauschungsfilterung des dem Bild $I_n$ vorausgehenden Bildes $I_{n-1}$ in der Bildserie erhalten wird,
- Berechnen eines jeweiligen Vertrauensindex $\alpha_n[B]$ für jeden Block B des Bildes $I_n$ aus dem jeweiligen Bewegungsvektor, der für den Block B bestimmt wurde, wobei $\alpha_n[B]$ repräsentativ für eine Korrelation zwischen dem Block B und einem Block B* des Bildes $I_{n-1}$ ist, der dem Block B entspricht,
- Konstruieren eines Zeitfilters aus den berechneten jeweiligen Vertrauensindizes $\alpha_n[B]$ und Anwenden des Zeitfilters auf das aktuelle Bild $I_n$, um ein zeitlich gefiltertes Bild $T_n$ zu erhalten,
- Durchführen einer räumlichen Entrauschungsfilterung des aktuellen Bildes $I_n$ der Serie, um ein räumlich gefiltertes Bild $D_n$ zu erhalten; und
- Erhalten eines zeitlich und räumlich gefilterten Bildes $R_n$ durch Anwenden einer Funktion, die das zeitlich gefilterte Bild $T_n$ und das räumlich gefilterte Bild $D_n$ kombiniert,
wobei das Verfahren **dadurch gekennzeichnet ist, dass** der jeweilige Vertrauensindex $\alpha_n[B]$, der für den Block B berechnet wird, aus einem Parameter *P[B]* berechnet wird, der die Korrelation zwischen einem Block, der dem Block B im Bild $D_n$ entspricht, und einem Block, der dem Block B* im Bild $D_{n-1}$ entspricht, bewertet, wobei $D_{n-1}$ durch räumliche Entrauschungsfilterung der Rauschunterdrückung des Bildes $I_{n-1}$ erhalten wird, und dass der Vertrauensindex $\alpha_n[B]$ wie folgt beschrieben ist:

$$\alpha_n[B] = P[B] * clip(s + v * \alpha_{n-1}[B*], 0, 1)$$

wobei

$$clip(x, min, max) = \begin{cases} min \text{ wenn } x < min \\ max \text{ wenn } x > max \\ \text{sonst } x \end{cases}$$

und wobei:

- *s* eine Verschiebung bezeichnet,
- *v* eine Lerngeschwindigkeit bezeichnet,
- $\alpha_{n-1}[B*]$ einen Konfidenzindex bezeichnet, der für den Block B* des Bildes $I_{n-1}$ berechnet wurde.

**2.** Verfahren nach Anspruch 1, wobei ein Block $T_n[B]$ des zeitlich gefilterten Bildes $T_n$ und entsprechend dem Block B als eine Linearkombination von $T_{n-1}[B*]$ und $I_n[B]$ beschrieben wird, wobei $T_{n-1}[B*]$ einen Block des zeitlich gefilterten Bildes $T_{n-1}$ bezeichnet, der durch zeitliches Filtern des Blocks B* des Bildes $I_{n-1}$, das dem Bild $I_n$ in der Bildserie vorausgeht, erhalten wird, und $I_n[B]$ den Block B des Bildes $I_n$ bezeichnet.

**3.** Verfahren nach Anspruch 2, wobei der Block $T_n[B]$ nach der folgenden Formel berechnet wird:

$$T_n[B] = \alpha_n[B] * T_{n-1}[B*] + (1 - \alpha_n[B]) * I_n[B].$$

**4.** Verfahren nach Anspruch 3, wobei für n = 0 der folgende Ausdruck für alle Blöcke $T_0[B]$ des Bildes $T_0$ überprüft wird:

$$T_0[B] = I_0[B] \ et \ \alpha_0[B] = 0$$

**5.** Verfahren nach Anspruch 1, wobei gilt $0 \leq P[B] \leq 1$ *et* $0 \leq \alpha_0[B] \leq 1$.

**6.** Verfahren nach einem der vorhergehenden Ansprüche, wobei der Block $R_n[B]$, der dem Block B in dem zeitlich und räumlich gefilterten Bild $R_n$ entspricht, als Linearkombination des Blocks $T_n[B]$, der dem Block B in dem Bild $T_n$ entspricht, und des Blocks $D_n[B]$, der dem Block B in dem räumlich gefilterten Bild $D_n$ entspricht, beschrieben wird.

**7.** Verfahren nach Anspruch 6, wobei der Block $R_n[B]$, der dem Block B in dem zeitlich und räumlich gefilterten Bild $R_n$ entspricht, mit der folgenden Form beschrieben wird:

$$R_n[B] = \alpha_n[B] * T_n[B] + (1 - \alpha_n[B]) * D_n[B]$$

**8.** Computerprogramm, umfassend Anweisungen zur Durchführung der Schritte des Verfahrens nach einem der vorhergehenden Ansprüche, wenn diese Anweisungen von einem Prozessor ausgeführt werden.

**9.** Vorrichtung zur Rauschbearbeitung eines digitalen Videostreams, der eine Serie aufeinanderfolgender digitaler Bilder umfasst, wobei die Vorrichtung einen Prozessor umfasst, der dazu ausgebildet ist, die folgenden Operationen auszuführen:

    - Räumliche Entrauschungsfilterung eines aktuellen Bildes mit dem Index n $I_n$ aus der Serie, um ein räumlich gefiltertes Bild $S_n$ zu erhalten, wobei der Index n eine ganze natürliche Zahl ist,
    - Bestimmung eines jeweiligen Bewegungsvektors für jeden Pixelblock des Bildes $S_n$ aus einem einzelnen Bild $S_{n-1}$, das durch räumliche Entrauschungsfilterung des dem Bild $I_n$ vorausgehenden Bildes $I_{n-1}$ in der Bildserie erhalten wurde,
    - Berechnung eines jeweiligen Vertrauensindex $\alpha_n[B]$ für jeden Block B des Bildes $I_n$ aus dem jeweiligen Bewegungsvektor, der für den Block B bestimmt wurde, wobei $\alpha_n[B]$ repräsentativ für eine Korrelation zwischen dem Block B und einem Block B* des Bildes $I_{n-1}$ ist, entsprechend dem Block B,
    - Konstruktion eines Zeitfilters aus den berechneten jeweiligen Vertrauensindizes $\alpha_n[B]$ und Anwendung des Zeitfilters auf das aktuelle Bild $I_n$, um ein zeitlich gefiltertes Bild $T_n$ zu erhalten,
    - räumliches Entrauschungsfiltern des aktuellen Bildes $I_n$ der Serie, um ein räumlich gefiltertes Bild $D_n$ zu erhalten, und
    - Erhalten eines zeitlich und räumlich gefilterten Bildes $R_n$ durch Anwenden einer Funktion, die das zeitlich gefilterte Bild $T_n$ und das räumlich gefilterte Bild $D_n$ kombiniert, und
    wobei die Vorrichtung **dadurch gekennzeichnet ist, dass** der Prozessor dazu ausgebildet ist, auch die folgenden Operationen durchzuführen:

        der jeweilige Vertrauensindex $\alpha_n[B]$ wird aus einem Parameter *P[B]* berechnet, der die Korrelation zwischen einem Block, der dem Block B in dem Bild $D_n$ entspricht, und einem Block, der dem Block B* in dem Bild $D_{n-1}$ entspricht, bewertet, wobei $D_{n-1}$ durch räumliche Entrauschungsfilterung des Bildes $I_{n-1}$ erhalten wird, und
        der Vertrauensindex $\alpha_n[B]$ wird wie folgt beschrieben:

$$\alpha_n[B] = P[B] * clip(s + v * \alpha_{n-1}[B *], 0,1)$$

wobei

$$clip(x, min, max) = \begin{cases} min \; \text{wenn } x < min \\ max \; \text{wenn } x > max \\ \quad \text{sonst } x \end{cases}$$

und wobei:

- $s$ eine Verschiebung bezeichnet,
- $v$ eine Lerngeschwindigkeit bezeichnet,
- $\alpha_{n-1}[B *]$ einen Konfidenzindex bezeichnet, der für den Block B* des Bildes $I_{n-1}$ berechnet wurde.

10. Vorrichtung nach Anspruch 9, wobei ein Block $T_n[B]$ des zeitlich gefilterten Bildes $T_n$, der dem Block B entspricht, als Linearkombination von $T_{n-1}[B *]$ und $I_n[B]$ beschrieben wird, wobei $T_{n-1}[B *]$ einen Block des zeitlich gefilterten Bildes $T_{n-1}$ bezeichnet, der durch zeitliches Filtern des Blocks B* des Bildes $I_{n-1}$, das dem Bild $I_n$ in der Bildserie vorausgeht, erhalten wird, und $I_n[B]$ den Block B des Bildes $I_n$ bezeichnet.

11. Vorrichtung nach Anspruch 10, wobei der Block $T_n[B]$ nach der folgenden Formel berechnet wird:

$$T_n[B] = \alpha_n[B] * T_{n-1}[B *] + (1 - \alpha_n[B]) * I_n[B].$$

12. Vorrichtung nach Anspruch 11, wobei für n = 0 der folgende Ausdruck für alle Blöcke $T_0[B]$ des Bildes $T_0$ überprüft wird:

$$T_0[B] = I_0[B] \; et \; \alpha_0[B] = 0.$$

13. Vorrichtung nach Anspruch 9, wobei $0 \leq P[B] \leq 1$ und $0 \leq \alpha_0[B] \leq 1$.

14. Vorrichtung nach einem der Ansprüche 9 bis 13, wobei der Block $R_n[B]$, der dem Block B in dem zeitlich und räumlich gefilterten Bild $R_n$ entspricht, als Linearkombination des Blocks $T_n[B]$, der dem Block B in dem Bild $T_n$ entspricht, und des Blocks $D_n[B]$, der dem Block B in dem räumlich gefilterten Bild $D_n$ entspricht, beschrieben wird.

15. Vorrichtung nach Anspruch 14, wobei der Block $R_n[B]$, der dem Block B im zeitlich und räumlich gefilterten Bild $R_n$ entspricht, in der folgenden Form beschrieben wird:

$$R_n[B] = \alpha_n[B] * T_n[B] + (1 - \alpha_n[B]) * D_n[B].$$

**Claims**

1. A method, implemented by computer means, for processing the noise of a digital video stream comprising a series of successive images, the method comprising:

   - spatial filtering to denoise a current image $I_n$ of the series in order to obtain a spatially filtered image $S_n$, n being a natural number;
   - determining a respective motion vector for each block of pixels of the image $S_n$ from a single image $S_{n-1}$ obtained by spatial denoising filtering of the image $I_{n-1}$ preceding the image $I_n$ in the series of images;
   - calculating a respective confidence index $\alpha_n[B]$ for each block B of image $I_n$ from the respective motion vector determined for the block B, where $\alpha_n[B]$ is representative of a correlation between the block B and a block B* of the image $I_{n-1}$ corresponding to the block B;
   - constructing a temporal filter from the calculated confidence indices $\alpha_n[B]$ and applying the temporal filter to

the current image $I_n$ in order to obtain a temporally filtered image $T_n$;
- spatial filtering to denoise the current image $I_n$ of the series in order to obtain a spatially filtered image $D_n$, and
- obtaining a temporally and spatially filtered image $R_n$ by applying a function combining the temporally filtered image $T_n$ and the spatially filtered image $D_n$.

the method being **characterized in that** the respective confidence index $\alpha_n[B]$ for the block B is calculated from a parameter P[B] evaluating the correlation between a corresponding to the block B in the image $D_n$ and a block corresponding to the block B* in the image $D_{n-1}$, Dn-1 being obtained by spatial denoising filtering of the image $I_{n-1}$, and **in that**
the confidence index $\alpha_n[B]$ is expressed as follows:

$$\alpha_n[B] = P[B] * \text{clip}(s + v * \alpha_{n-1}[B^*], 0, 1)$$

$$\text{with clip}(x, \min, \max) = \begin{cases} \min \text{ if } x < min \\ \max \text{ if } x > max \\ \quad \text{else } x \end{cases}$$

where:

- s denotes an offset
- v a learning speed
- $\alpha_{n-1}[B^*]$ denotes a confidence index calculated for the block B* of image $I_{n-1}$

2. Method according to claim 1, wherein a block $T_n[B]$ of the temporally filtered image $T_n$ is written as $T_n[B]$ and corresponding to the block B is expressed as a linear combination of $T_{n-1}[B^*]$ and $I_n[B]$, and wherein $T_{n-1}[B^*]$ designates a block of the temporally filtered image $T_{n-1}$ obtained by temporal filtering of the block B* of the image $I_{n-1}$ preceding the image $I_n$ in the series of images, and $I_n[B]$ denotes the block B in the image $I_n$.

3. Method according to claim 2, wherein the block $T_n[B]$ is calculated according to the following formula:

$$T_n[B] = \alpha_n[B] * T_{n-1}[B^*] + (1 - \alpha_n[B]) * I_n[B]$$

4. Method according to claim 3, wherein for n = 0, the following expression is satisfied for all blocks $T_0[B]$ of image $T_0$:

$$T_0[B] = I_0[B] \quad \text{and} \quad \alpha_n[B] = 0$$

5. Method according to claim 1, wherein $0 \leq P[B] \leq 1$ and $0 \leq \alpha_n[B] \leq 1$.

6. Method according to any one of the preceding claims, wherein the block $R_n[B]$ corresponding to the block B in the temporally and spatially filtered image $R_n$ is expressed in the form of a linear combination of the block $T_n[B]$ corresponding to the block B in the image $T_n$ and the block $D_n[B]$ corresponding to the block B in spatially filtered image $D_n$.

7. Method according to claim 6, wherein the block $R_n[B]$ corresponding to the block B in the temporally and spatially filtered image $R_n$ is expressed in the following form:

$$R_n[B] = \alpha_n[B] * T_n[B] + (1 - \alpha_n[B]) * D_n[B]$$

8. Computer program comprising instructions for implementing the steps of the method according to any one of the preceding claims, when these instructions are executed by a processor.

9. Device for processing noise in a digital video stream comprising a series of successive digital images, the device comprising:

- a processor configured to perform the following operations:

- spatial filtering to denoise a current image with index n, $I_n$, of the series in order to obtain a spatially filtered image $S_n$, the index n being a natural number;
- determining a respective motion vector for each block of pixels of the image $S_n$ from a single image $S_{n-1}$ obtained by spatial denoising filtering of the image $I_{n-1}$ preceding the image $I_n$ in the series of images;
- calculating a respective confidence index $\alpha_n[B]$ for each block B of image $I_n$ from the respective motion vector determined for the block B, where $\alpha_n[B]$ is representative of a correlation between the block B and a block B* of the image $I_{n-1}$ corresponding to the block B;
- constructing a temporal filter from the respective calculated confidence indices $\alpha_n[B]$ and applying the temporal filter to the current image $I_n$ in order to obtain a temporally filtered image $T_n$;
- spatial filtering to denoise the current image $I_n$ of the series in order to obtain a spatially filtered image $D_n$, and
- obtaining a temporally and spatially filtered image $R_n$ by applying a function combining the temporally filtered image $T_n$ and the spatially filtered image $D_n$,

the device being **characterized in that** the processor is also configured to perform the following operations:

the respective confidence index $\alpha_n[B]$ for the block B is calculated from a parameter P[B] evaluating the correlation between a corresponding to the block B in the image $D_n$ and a block corresponding to the block B* in the image $D_{n-1}$, $D_{n-1}$ being obtained by spatial denoising filtering of the image $I_{n-1}$, and
the confidence index $\alpha_n[B]$ is expressed as follows:

$$\propto_n [B] = P[B] * \text{clip}(s + v * \propto_{n-1} [B^*], 0, 1)$$

$$\text{with clip}(x, \min, \max) = \begin{cases} \min \text{ if } x < min \\ \max \text{ if } x > max \\ \text{else } x \end{cases}$$

where:

- s denotes an offset
- v a learning speed
- $\propto_{n-1} [B^*]$ denotes a confidence index calculated for the block B* of image $I_{n-1}$

10. Device according to claim 9, wherein a block $T_n[B]$ of the temporally filtered image $T_n$ is written as $T_n[B]$ and corresponding to the block B is expressed as a linear combination of $T_{n-1}[B^*]$ and $I_n[B]$, and wherein $T_{n-1}[B^*]$ designates a block of the temporally filtered image $T_{n-1}$ obtained by temporal filtering of the block B* of the image $I_{n-1}$ preceding the image $I_n$ in the series of images, and $I_n[B]$ denotes the block B in the image $I_n$.

11. Device according to claim 10, wherein the block $T_n[B]$ is calculated according to the following formula:

$$T_n[B] = \alpha_n[B] * T_{n-1}[B^*] + (1 - \alpha_n[B]) * I_n[B]$$

12. Device according to claim 11, wherein for n = 0, the following expression is satisfied for all blocks $T_0[B]$ of image $T_0$:

$$T_0[B] = I_0[B] \quad \text{and} \quad \alpha_n[B] = 0$$

13. Device according to claim 9, wherein $0 \le P[B] \le 1$ and $0 \le \alpha_n[B] \le 1$.

14. Device according to any one of the preceding claims 9-13, wherein the block $R_n[B]$ corresponding to the block B in the temporally and spatially filtered image $R_n$ is expressed in the form of a linear combination of the block $T_n[B]$ corresponding to the block B in the image $T_n$ and the block $D_n[B]$ corresponding to the block B in spatially filtered image $D_n$.

**15.** Device according to claim 14, wherein the block $R_n[B]$ corresponding to the block B in the temporally and spatially filtered image $R_n$ is expressed in the following form:

$$R_n[B] = \alpha_n[B] * T_n[B] + (1 - \alpha_n[B]) * D_n[B]$$

FIG. 1

FIG. 2

FIG. 3

$I_{n-1}$

$I_n$

2.2 - ME

2.1 - Débruitage spatial

Vecteur de mouvement

$S_{n-1}$

$S_n$

## FIG. 4

$B_0$

$B_1$

$B_2$

0

1

2

## FIG. 5

FIG. 6

FIG. 7

```
┌─────────────────────────┐
│        FILT_SPA         │──── 801
│      $I_n \rightarrow S_n$         │
└─────────────────────────┘
            │
            ▼
┌─────────────────────────┐
│      DET_MOT_VECT       │──── 802
└─────────────────────────┘
            │
            ▼
┌─────────────────────────┐
│       CALC_CONF         │──── 803
│       $\alpha_n \, [\beta]$           │
└─────────────────────────┘
            │
            ▼
┌─────────────────────────┐
│     CONS_FILT_TEMP      │──── 804
│          $T_n$          │
└─────────────────────────┘
            │
            ▼
┌─────────────────────────┐
│       FILT_SPA2         │──── 805
│      $I_n \rightarrow D_n$         │
└─────────────────────────┘
            │
            ▼
┌───────────────────────────────┐
│  COMB  FILT_SPA2 + FILT_TEMP  │──── 806
│      $D_n + T_n = R_n$        │
└───────────────────────────────┘
```

# FIG. 8

FIG. 9

**RÉFÉRENCES CITÉES DANS LA DESCRIPTION**

**Documents brevets cités dans la description**

- US 2010220939 A1
- US 2009323808 A1
- US 2009278945 A1